# EUROPÄISCHE PATENTSCHRIFT

(11) **EP 4 001 735 B1**
(45) Veröffentlichungstag und Bekanntmachung des Hinweises auf die Patenterteilung: **10.04.2024**
(21) Anmeldenummer: 20208251.7
(22) Anmeldetag: 18.11.2020
(51) Int. Cl.: F17D 5/00

(54) **ÜBERWACHUNG VON ROHRLEITUNGSSYSTEMEN**
MONITORING OF PIPE SYSTEMS
SURVEILLANCE DES SYSTÈMES DE TUYAUTERIE

(43) Veröffentlichungstag der Anmeldung: 25.05.2022
(73) Patentinhaber: Georg Fischer Rohrleitungssysteme AG, 8201 Schaffhausen (CH)
(72) Erfinder: Barbone, Riccardo, 8200 Schaffhausen (CH)
(74) Vertreter: Fenner, Seraina

(56) Entgegenhaltungen:
- EP-A1- 3 567 294
- US-A1- 2018 350 273
- US-B2- 10 443 772

## Beschreibung

Die Erfindung betrifft ein Verfahren und ein System zur Erkennung von Verschiebungen in installierten Rohrleitungssystemen und Identifizierung von Komponenten und deren Eigenschaften, beinhaltend:
- anordnen oder anbringen von mindestens zwei Markierungen auf mindestens einer der Komponenten des installierten Rohrleitungssystems, oder an unterschiedlichen Komponenten oder an einer Komponente und einem Bauelement,
- erfassen oder scannen oder fotografieren der Markierung und generieren einer Basisaufnahme des Ausgangszustands,
- speichern der Basisaufnahme vorzugsweise in einer Datenbank,
- der Basisaufnahme entsprechende Eigenschaften und Daten zuweisen und hinterlegen,
- erneutes Erfassen oder Scannen oder Fotografieren der Markierung,
- autonomes Erkennen der Markierung und Vergleichen mit der gespeicherten Basisaufnahme der entsprechenden Markierung,
- ermitteln von Veränderungen oder Verschiebungen der Markierung,
- Ausgabe von ermittelten Werten.

Aus dem Stand der Technik sind Rohrleitungssysteme bekannt die Markierungen aufweisen, die es erlauben die Rohre und ihre Position zu identifizieren. Durch die Erkennung der Markierung kann evaluiert werden, welche Art von Rohr eingesetzt wurde. Beispielsweise kann die Markierung am Innenumfang des Rohres angeordnet sein, die mittels eines Kanalroboters erkannt wird und die entsprechenden Daten, welche bereits beim Verlegen der Leitung erfasst und gespeichert wurden werden angezeigt. Dies lässt auch eine Ermittlung der Position von Rohrleitungskomponenten zu, die unter der Erde verbaut sind, indem der verlegten Komponente bereits die Koordinaten bei der Installation zugewiesen werden.

Die US 2001/0029989 A1 offenbart eine alphanummerische Markierung für Rohrleitungen, welche es erlaubt die Position sowie die Rohrleitung zu identifizieren.

Die aus dem Stand der Technik bekannten Systeme lassen eine Identifizierung der Rohrleitung sowie die Erkennung deren Position zu, jedoch ermöglichen sie keine Erkennung von Veränderungen im Rohrleitungssystem.

Die US 2018/0350273 A1 offenbart eine Rohrleitungssysteme an dem Markierungen angebracht werden, die es ermöglichen die Komponenten eindeutig zu erkennen. Es ist Aufgabe der Erfindung ein Verfahren und ein damit verbundenes System vorzuschlagen, dass es erlaubt auftretende Spannungen in bereits verlegten und installierten Rohrleitungssystemen frühzeitig zu erkennen um eventuell entstehende Leckagen oder Rohrbrüche zu verhindern.

Diese Aufgabe wird erfindungsgemäss dadurch gelöst, dass die mindestens zwei Markierungen so angeordnet sind, dass sie auf einer Basisaufnahme gemeinsam erfasst werden. Wobei am erfindungsgemässen System mindestens zwei Markierungen am Rohrleitungssystem angeordnet sind, wobei jeweils zwei Markierungen ein Paar bilden, wobei das Markierungspaar in einer Basisaufnahme erfasst ist.

Das erfindungsgemässe Verfahren zur Erkennung von Verschiebungen in installierten Rohrleitungssystemen und Identifizierung von Komponenten und deren Eigenschaften, beinhaltet ein Anordnen bzw. Anbringen einer Markierung auf mindestens einer der Komponenten des installierten Rohrleitungssystems. Jede Markierung ist eindeutig, unverwechselbar und einzigartig. Das Anordnen bzw. Anbringen der Markierung kann durch aufkleben, einprägen oder auf andere bekannte Weise erfolgen. Vorzugsweise wird die Markierung erst angebracht, wenn das Rohrleitungssystem fertig installiert ist oder zumindest dieser Bereich des Rohrleitungssystems fest verankert ist.

Die am Rohrleitungssystem angebrachte Markierung wird erfasst bzw. gescannt bzw. fotografiert und es wird eine Basisaufnahme des Ausgangszustands generiert oder erstellt. Ob ein Erfassen, Scannen oder Photographien angewandt wird ist abhängig davon mit welchem Tool dies durchgeführt wird, vorzugsweise wird dazu ein mobiles Endgerät oder eine Digitalkamera verwendet, wobei diese vorzugsweise mit einem Rechner verbindbar sind. Vorzugsweise wird die Markierung so erfasst bzw. gescannt bzw. fotografiert, dass auf der Basisaufnahme zumindest ein Teilbereich der Komponenten des Rohrleitungssystems ersichtlich ist. Es ist von Vorteil, wenn ein 3D Scann durchgeführt wird, dies ermöglicht eine gute 3-dimensionale Vermessungen der Installation speziell in Z-Richtung.

Der erfassten Markierung werden Eigenschaften und Daten zugewiesen und hinterlegt, wobei die Eigenschaften und Daten sich vorzugsweise auf die entsprechende Komponente beziehen, auf der die Markierung angebracht ist. Beispielsweise kann auch der Standort der Markierung hinterlegt werden, wie auch Angaben zum Installateur des Rohrleitungssystems oder der Verbauungszeitpunkt, etc..

Die Basisaufnahme wird gespeichert, vorzugsweise in einer Datenbank, wobei es vorteilhaft ist, wenn von überall auf die gespeicherten Basisaufnahmen bzw. auf die hinterlegten Daten zugegriffen werden kann oder auf die Datenbank, wodurch sich eine Cloud-Lösung anbieten würde. Es ist vorteilhaft wenn die Basisaufnahme des Ausgangszustands ebenfalls der entsprechenden Markierung bzw. dem Markierungspaar zugewiesen und hinterlegt wird.

Durch ein erneutes Erfassen oder Scannen oder Fotografieren der Markierung, wird vorzugsweise eine Folgeaufnahme erstellt. Des Weiteren wird autonom die Markierung, welche einzigartig ist erkannt und die Folgeaufnahme mit der Basisaufnahme verglichen. Durch das Vergleichen werden Veränderungen oder Verschiebungen der Markierung in Bezug auf die Basisaufnahme ermittelt. Die ermittelten Werte werden dann entsprechend ausgegeben. Es ist vorteilhaft wenn die Folgeaufnahme und weitere Folgeaufnahmen ebenfalls gespeichert werden, dadurch lässt sich eine Historie erstellen, welche die Veränderung bzw. Verschiebung des Rohrleitungssystems an einer Stelle über eine bestimmte Zeit aufzeigt.

Das vorliegende erfindungsgemässe Verfahren beinhaltet, dass an einem Rohrleitungssystem mindestens zwei Markierungen so angeordnet werden, dass sie auf einer Basisaufnahme gemeinsam erfasst werden. Dies erlaubt, das Erkennen der Verschiebung der beiden Markierungen zueinander. Dadurch kann festgestellt werden, wie sich eine Markierung bzw. in welche Richtungen und wie weit sie sich im Vergleich zur anderen verschoben hat. Daraus kann ermittelt werden wie sich das Rohrleitungssystem und seine Komponenten in seiner Lage verändert bzw. verschoben haben. Das erfindungsgemässe Verfahren ermöglicht die Erkennung einer Verschiebung der Markierungen in horizontaler und vertikaler Richtung sowie auch in der Tiefe, bzw. in X-, Y- und Z-Richtung. Auch eine Winkelverschiebung Θ kann mit dem erfindungsgemässen Verfahren erfasst und ausgewertet werden.

Es ist vorteilhaft, wenn zur Markierung ein QR-Code verwendet wird. Durch die Einzigartigkeit eines solchen QR-Codes wird er eindeutig wiedererkannt. Zudem ist durch die geometrische Ausgestaltung des Codes die Verschiebung einfach zu ermitteln sowie die Definition der Verschiebung oder Veränderung in die X-, Y, und Z-Richtung bzw. horizontal, vertikal oder in die Tiefe, wie auch Winkelverschiebungen ermittelt und definiert werden können.

Eine bevorzugte Ausführungsform besteht darin, dass mindestens zwei Markierungen an unterschiedlichen Komponenten oder an einer Komponente und einem Bauelement angeordnet werden. Dadurch lässt sich einer Verschiebung der Komponenten zueinander gut erkennen. Als Bauelement ist eine Wand, ein Boden, eine Decke oder Pfeiler oder sonstige stabile Strukturen an denen ein Rohrleitungssystem in der Regel befestigt wird.

Vorzugsweise werden zwei Markierungen angeordnet, wobei die beiden Markierungen ein Paar bilden, welches auf der Basisaufnahme erfasst wird. Dadurch bildet die eine Markierung den "Master" und die andere Markierung den "Slave" wodurch sich die Verschiebung der Markierungen gut in die jeweilige Richtung X, Y und Z ermitteln lässt. Jede Folgeaufnahme wird entsprechend gespeichert wodurch eine sukzessive Verschiebung erkennbar ist.

Vorzugsweise kann durch die stetige Überwachung mittels den erfassten Folgeaufnahmen beispielsweise ein automatischer Alarm gesetzt werden der beispielsweise auslöst, wenn ein bestimmter Wert der Verschiebung erreicht oder überschritten ist. Wie dieser Alarm erfolgt ist individuell zu handhaben, sei es mittels einer Mitteilung an den Rohrleitungssystemunterhalt oder einer Warnleuchte oder sonst einem bekannten Alarmsystem.

Vorzugsweise wird mittels den ermittelten Werten der auftretenden Verschiebung bzw. Veränderung der Position der Markierung eine Beurteilung der Verschiebung und/oder eine Empfehlung zur Unterdrückung einer Verschiebung des Rohrleitungssystems an der entsprechenden Stelle kalkuliert. Vorzugsweise wird zur Kalkulation ein Algorithmus verwendet.

Es ist vorteilhaft, wenn die ermittelten Werte mittels eins Algorithmus eine Beurteilung der Verschiebung und/oder eine Empfehlung zur Reduktion der Verschiebung kalkulieren. Dadurch kann frühzeitig verhindert werden, dass das Rohrleitungssystem leckt bzw. sich Risse bilden oder Verschraubungen lösen wie auch andere ungewollte Probleme mit dem Rohrleitungssystem vermieden werden können. Eine weitere Ausgestaltung des Verfahrens besteht darin, dass sich der Algorithmus laufend optimiert, somit selbstlernend ist.

Das erfindungsgemässe System zur Erkennung von Verschiebungen in installierten Rohrleitungssystemen und Identifizierung von Komponenten und deren Eigenschaften, beinhaltet ein installiertes Rohrleitungssystem und dessen Komponente, wie beispielsweise, Rohren, Ventilen, Fittings, Kupplungen etc., und Befestigungselemente sowie Bauelemente an denen die Befestigungselemente fixiert sind. Zudem beinhaltet das System Markierungen, wobei mindestens zwei Markierungen am Rohrleitungssystem angeordnet sind und vorzugsweise nach dem Installieren des Rohrleitungssystems angebracht werden. Jeweils zwei Markierungen bilden ein Paar, wobei das Markierungspaar in einer Basisaufnahme erfasst ist. Die Basisaufnahme dokumentiert den Ausgangszustand, direkt nach der Installation der Rohrleitung. Beim Rohrleitungssystem handelt es sich um ein System, welches nicht in der Erde vergraben ist sondern mittels Befestigungselementen an Bauelementen wie Wänden, Decken, Böden oder sonstigen festen Elementen verankert ist und mehr oder weniger zugänglich ist, zumal insoweit zugänglich, dass Aufnahmen von den Markierungen gemacht werden können.

Es ist vorteilhaft, wenn die Markierung durch einen QR-Code gebildet ist. Dies bringt den Vorteil mit sich, dass jede Markierung einzigartig ist und somit nicht verwechselbar. Der Markierung bzw. dem QR-Code werden dann die gewünschten Daten und Eigenschaften hinterlegt wie bereits oben beschrieben.

Gemäss einer bevorzugten Ausführungsform ist eine Markierung des Markierungspaars auf einer Komponente des Rohrleitungssystems angeordnet und die andere Markierung auf einer anderen Komponente oder einem Bauelement oder einem Befestigungselement. Da sich meist Verschiebungen und Veränderungen zwischen den einzelnen Komponenten im Rohrleitungssystem ergeben, ist es vorteilhaft wenn die Markierungen des Markierungspaares, welche als QR-Code ausgebildet sind, nicht auf derselben Komponente angeordnet sind.

Es ist vorteilhaft, wenn das System ein mobiles Endgerät und/oder eine Digitalkamera zum Erfassen / Scannen / Photographien der Markierung beinhaltet. Es ist zudem vorteilhaft wenn das System einen Speicher aufweist der es ermöglicht die erfassten Aufnahmen wie Basisaufnahmen und Folgeaufnahmen abzuspeichern. Des Weiteren ist es vorteilhaft wenn das System eine Recheneinheit aufweist, die es erlaubt mittels eines Algorithmus die Aufnahmen entsprechend auszuwerten wie oben beschrieben.

Gemäss einer bevorzugten Ausführungsform ermöglicht das mobile Endgerät auch die Ausgabe der ermittelten Werte wie auch die Beurteilung dieser und wenn vorhanden auch eine Empfehlung zur Reduktion der Rohrleitungsverschiebung.

Alle Ausgestaltungmöglichkeiten sind untereinander frei kombinierbar sowie Merkmale des Verfahrens wie auch Merkmale des Systems untereinander kombiniert werden können.

Ein Ausführungsbeispiel der Erfindung wird anhand der Figuren beschrieben, wobei sich die Erfindung nicht nur auf das Ausführungsbeispiel beschränkt. Es zeigen:
Fig. 1 ein Schema des erfindungsgemässen Verfahrens,
Fig. 2 ein Markierungspaar mit Master und Slave,
Fig. 3 Beispiel einer Anordnungsmöglichkeit eines Markierungspaars,
Fig. 4 Beispiel einer Anordnungsmöglichkeit eines Markierungspaars,
Fig. 5 Beispiel einer Anordnungsmöglichkeit eines Markierungspaars,
Fig. 6 Aufgezeigte Verschiebung in einer Rohrleitung und
Fig. 7 Endgerät mit möglichen Anzeigen.

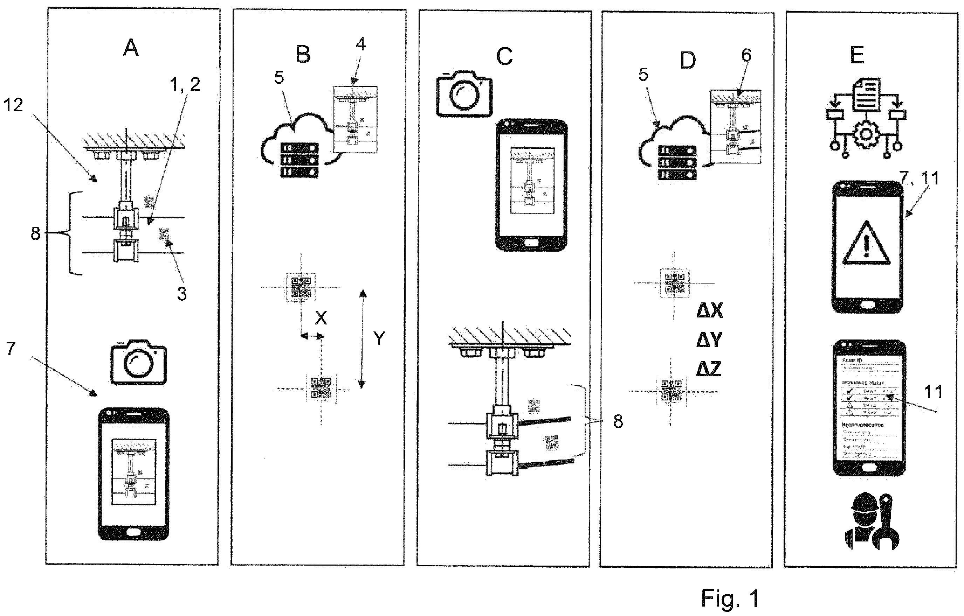

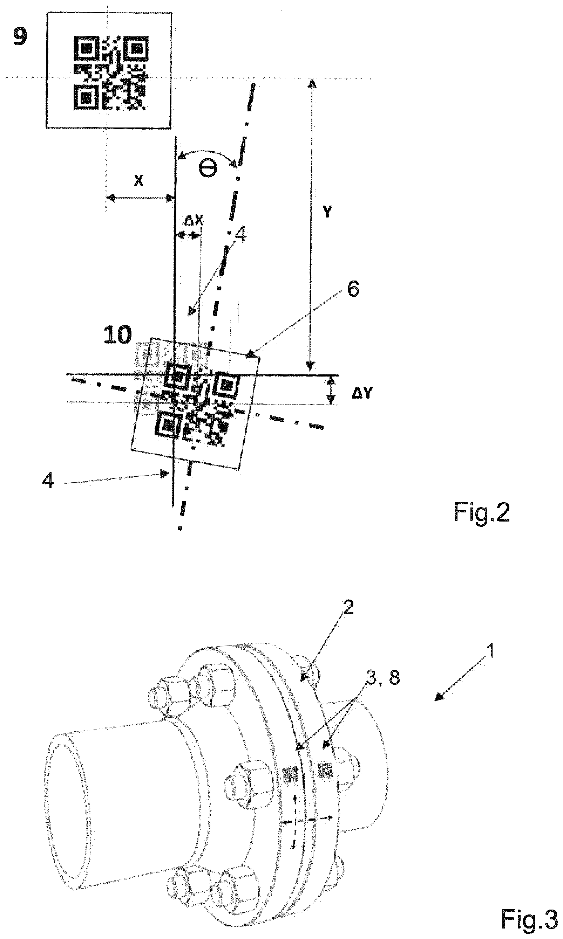

Fig. 1 zeigt das erfindungsgemässe Verfahren schematisch. In Abschnitt A ist zu erkennen, dass Markierungen 3 an Komponenten 2 des Rohrleitungssystems 1 oder auch an Bauelementen 13, wie Wände, Pfeiler usw. angeordnet werden, wobei die Markierungen selbstverständlich auf jeder möglichen Komponente des Rohrleitungssystems 1 angeordnet werden können. In den Figuren 3 bis 5 sind weitere Möglichkeiten von Anordnung von Markierungen 3 welche vorzugsweise als QR-Code ausgebildet sind an Komponenten 2 des Rohrleitungssystems 1 offenbart, wobei diese Aufführung selbstverständlich nicht abschliessend ist. Zudem wird in A aufgeführt, dass die Markierung 3, welche vorzugsweise als QR-Code ausgebildet ist, erfasst oder gescannt oder fotografiert wird, vorzugsweise mit einem mobilen Endgerät 7 oder eine Digitalkamera 7. Daraus wird eine Basisaufnahme 4 erstellt, welche den Ausgangszustand der Rohrleitung 1 an dieser Position bzw. mit den erfassten Komponenten 2 und/oder Bauelementen 13 aufzeigt, dies ist dem Abschnitt B zu entnehmen. Wobei durch die Basisaufnahme 4 die exakte Position und Ausrichtung der beiden Markierungen 3 zueinander erfasst wird. Zudem werden den Markierungen 3 Eigenschaften und Daten zugewiesen und hinterlegt. Beispielsweise Eigenschaften der jeweiligen Komponente, Eigenschaften der Rohrleitung, Standort, etc.. Die Basisaufnahme 4 wird gespeichert vorzugsweise in einer Datenbank 5 oder einem sonstigen Speicherort, wobei es von Vorteil ist wenn die Möglichkeit eines Fernzugriffs besteht und diverse Anwender darauf zugreifen können, wodurch ein Speichern in einer Cloud auch denkbar ist. Um nun zu erkennen ob sich eine Veränderung oder Verschiebung im Rohrleitungssystem 1 ergeben hat, wird die Markierung erneut erfasst oder gescannt oder fotographiert, wie in Abschnitt C gezeigt. Es werden erneut die beiden Markierungen 3 also dasselbe Markierungspaar 8 erfasst, vorzugsweise wieder mit einem mobilen Endgerät oder einer Digitalkamera die mit einem Rechner verbunden werden kann. Mit Hilfe einer Recheneinheit wird autonom erkannt um welche Markierung 3 bzw. Markierungspaar 8 es sich handelt und zugleich ein Vergleich der Positionen der Markierungen zueinander durchgeführt, was dem Abschnitt D zu entnehmen ist. Zudem ist es von Vorteil, wenn die erneute Erfassung des Markierungspaares 8 als Folgeaufnahme 6 ebenfalls gespeichert wird, wie auch weitere Folgeaufnahmen 6 erstellt und gespeichert werden können, wodurch eine entstehende Verschiebung bzw. Veränderung des Rohrleitungssystems 1 bei den entsprechenden Komponenten 2 beobachtet werden kann.

Die ermittelten Werte ΔX, ΔY, ΔZ, Θ der Verschiebung werden daraufhin ausgegeben 11, dies kann auch auf einem mobilen Endgerät 7 angezeigt werden oder auch durch ein anderes Anzeigegerät erfolgen, was in Abschnitt E dargestellt ist. Es kann aber auch auf eine visuelle Ausgabe der Werte verzichtet werden und die Werte werden gleich weiterverarbeitet bzw. für weitere Kalkulationen verwendet oder einfach vorerst nur gespeichert. Vorzugsweise kann mittels des erfindungsgemässen Verfahren auch eine Überwachung eines Rohrleitungssystems 1 erstellt werden, indem regelmässige Folgeaufnahmen 6 erfasst werden und automatisch die Verschiebung ermittelt wird aufgrund dessen auch ein Alarm hinterlegt werden kann, der beim Überschreiten oder Erreichen eines Wertes der Verschiebung ausgelöst wird. Dazu sollten Maximalwerte definiert und hinterlegt werden. Beim Auslösen des Alarms kann beispielsweise automatisch ein Verantwortlicher über ein mobiles Endgerät informiert werden wie auch andere bekannte Formen des Alarms denkbar sind. Zudem ist es vorteilhaft wenn dem Verfahren ein Algorithmus hinterlegt ist, der es ermöglicht aufgrund der ermittelten Werte der Verschiebung zwischen der Basisaufnahme und der Folgeaufnahme des Markierungspaares 8 eine Beurteilung der Verschiebung abzugeben und/oder eine Empfehlung wie die Verschiebung reduziert werden kann, bzw. was z.B. an der Befestigung 12 des Rohrleitungssystems zu verbessern ist oder andere Empfehlungen.

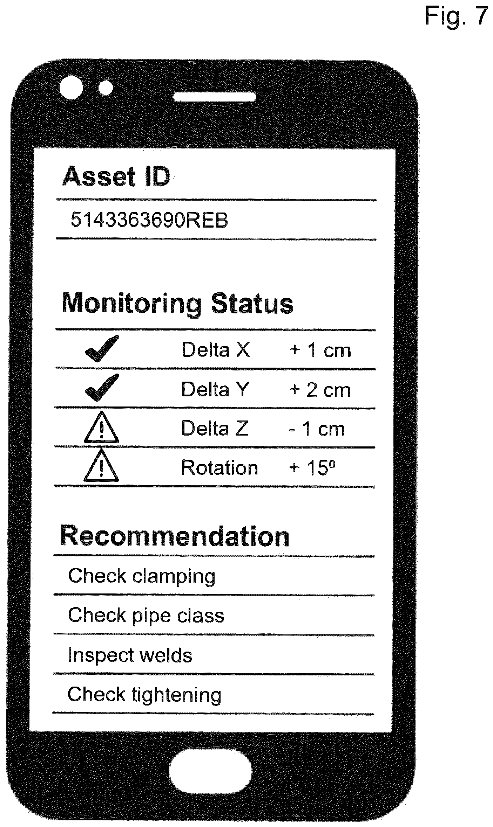

In Fig. 2 ist aufgezeigt wie die Ermittlung der Werte ΔX, ΔY, ΔZ, Θ vorzugsweise erfolgt. Dazu ist es vorteilhaft, wenn eine der beiden Markierungen als Master 9 definiert wird und die anderer des Markierungspaares 8 als Slave 10. Dadurch lässt sich die Verschiebung der Markierungen 3 zueinander gut in die Richtungen X, Y und Z definieren wie auch in eine Winkelverschiebung Θ und berechnen, wobei hier nur die Richtungen X, Y und die Winkelverschiebung Θ dargestellt sind, die Richtung Z ist hier die Tiefe und kann selbstverständlich genauso ermittelt werden. Es müssen auch nicht alle Werte ermittelt werden, manchmal sind zwei bereits ausreichend. Wie bereits erwähnt können auch Winkelverschiebungen Θ erkannt werden. In Fig. 2 ist aufgezeigt, dass sich die Folgeaufnahme 6 des Slaves 10 zur Basisaufnahme 4 (durch zwei breite Linien die sich kreuzen mit grauem QR-Code dargestellt) des Slaves 10 um ΔX, ΔY und eine Winkelverschiebungen Θ verschoben hat. Diese Werte werden dann entsprechend ausgegeben und/oder auch gespeichert. Darauf kann eine Beurteilung der Lage erfolgen oder auch eine Empfehlung wie auch ein Alarm eingerichtet sein kann der beim Überschreiten eines bestimmten Werts auslöst. Als Beispiel ist in Fig. 7 ein mobiles Endgerät 7 mit möglichen Ausgaben dargestellt.

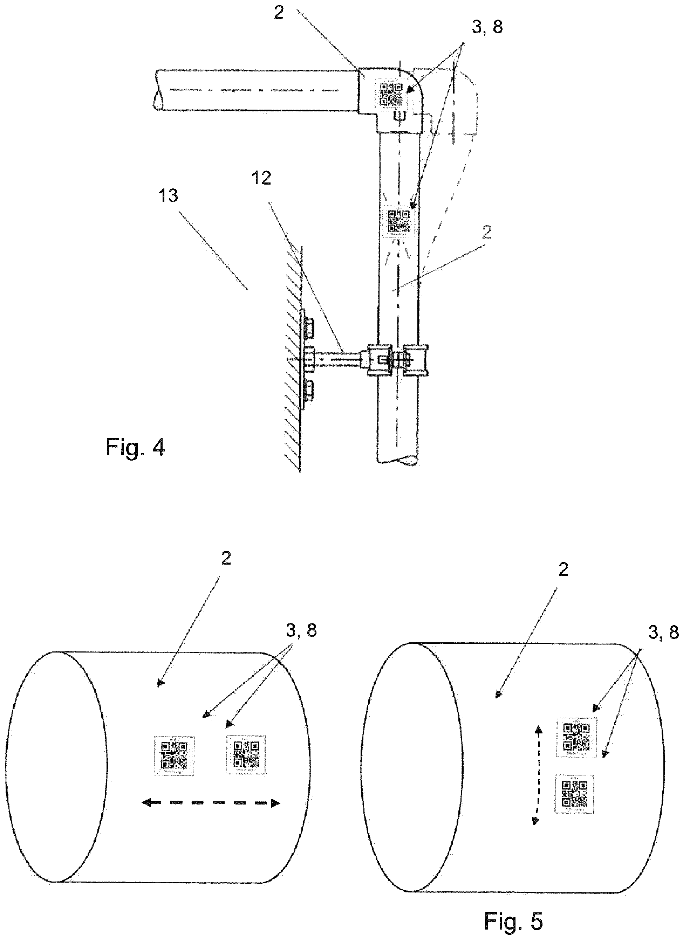

Fig. 3 zeigt eine Flanschkupplung als mögliche Komponente 2 der Rohrleitung 1 an deren Flanschen jeweils eine Markierung 3 angeordnet ist und die ein Markierungspaar 8 bilden. Fig. 4 zeigt eine an einem Bauelement 13 befestigte Rohrleitung 1 bei dem die Markierungen 3 auf einem Winkelstück und einem Rohr angebracht wurden. Die Markierungen 3 werden nach dem fertigen Verlegen des Rohrleitungssystems 1 angebracht, an welchen Komponenten 2 oder Bauelementen 13 entscheidet in der Regel der Installateur. In der Regel werden solche Komponenten 2 und Bauelemente 13 ausgewählt, bei denen eine Verschiebung bzw. Veränderung der Rohrleitung 1 gut erkennbar ist und sie durch ihre Lage oder durch ihren Einbau auch am ehesten dazu neigen und eine Gefahrenstelle für Leckagen darstellen. Üblich sind Befestigungselemente 12 die eine Rohrleitung 1 an einem Bauelement 13 befestigen.

Als weitere Einsatzmöglichkeit des erfindungsgemässen Verfahrens können Markierungen 3 bzw. Markierungspaare 8 auch an einem Rohr nebeneinander angeordnet werden, wie in Fig. 5 dargestellt. Dadurch kann eine Ausdehnung oder ein Schrumpfen wie im ersten Bild erkannt werden oder eine Blähung des Rohres wie in der zweiten Abbildung der Fig. 5

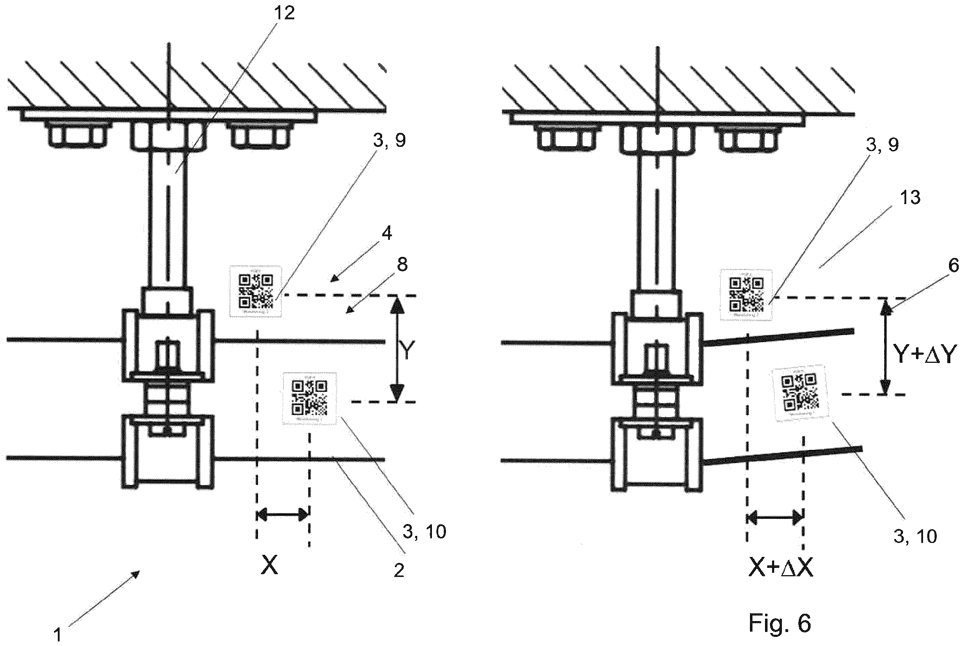

Fig. 6 zeigt das erfindungsgemässe System zur Erkennung einer Verschiebung oder Veränderung in einem installierten Rohrleitungssystem 1. Das System beinhaltet ein installiertes Rohrleitungssystem 1 mit Komponenten 2, Befestigungselemente 12 und Markierungen 3. Die Markierungen 3 welche vorzugsweise als QR-Code ausgebildet sind bilden jeweils ein Markierungspaar 8 welches in einer Basisaufnahme 4 erfasst ist. Die Basisaufnahme ist eine Abbildung des Ausgangszustands und wird dementsprechend gespeichert und als Vergleichswert hinterlegt. Zudem ist in Fig. 6 ersichtlich, dass eine Veränderung einer Komponente 2 aufgetreten ist. Die erste Abbildung stellt die Basisaufnahme 4 dar und in der zweiten ist die Verschiebung durch die Werte ΔX und ΔY erkennbar, welche dann vorzugsweise zum Vergleich in einer Folgeaufnahme 6 erfasst werden.

### Bezugszeichenliste

- 1: Rohrleitungssystem
- 2: Komponente
- 3: Markierung
- 4: Basisaufnahme Ausgangszustand
- 5: Speicherort, Datenbank
- 6: Folgeaufnahme
- 7: Mobiles Endgerät oder Digitalkamera
- 8: Markierungspaar
- 9: Master
- 10: Slave
- 11: Ausgabe, Mitteilung, Alarm, Beurteilung, Empfehlung
- 12: Befestigungselement
- 13: Bauelement (Wände, Böden, Decken, Pfeiler usw.)
- 14: Winkelverschiebung Θ

## Patentansprüche

1. Verfahren zur Erkennung von Verschiebungen in installierten Rohrleitungssystemen (1) und Identifizierung von Komponenten (2) und deren Eigenschaften, beinhaltend:
• anordnen oder anbringen von mindestens zwei Markierungen (3) auf mindestens einer der Komponenten (2) des installierten Rohrleitungssystems (1), oder an unterschiedlichen Komponenten (2) oder an einer Komponente (2) und einem Bauelement (13),
• erfassen oder scannen oder fotografieren der Markierung (3) und generieren einer Basisaufnahme (4) des Ausgangszustands,
• der Markierung (3) Eigenschaften und Daten zuweisen und hinterlegen,
• speichern der Basisaufnahme (4) an einem Speicherort (5),
• erneutes Erfassen oder Scannen oder Fotografieren der Markierung (3),
• autonomes Erkennen der Markierung (3) und Vergleichen mit der gespeicherten Basisaufnahme (4) der entsprechenden Markierung (3),
• ermitteln von Veränderungen oder Verschiebungen der Markierung (3),
• Ausgabe (11) von ermittelten Werten (ΔX, ΔY, ΔZ, Θ)
**dadurch gekennzeichnet, dass** die mindestens zwei Markierungen so angeordnet sind, dass sie auf einer Basisaufnahme (4) gemeinsam erfasst werden.

2. Verfahren nach Anspruch 1, **dadurch gekennzeichnet, dass** beim erneuten Erfassen oder Scannen oder Fotografieren der Markierung (3) eine Folgeaufnahme (6) erstellt wird.

3. Verfahren nach Anspruch 1 oder 2, **dadurch gekennzeichnet, dass** die Markierung (3) durch ein QR-Code gebildet wird.

4. Verfahren nach einem der Ansprüche 1 bis 3, **dadurch gekennzeichnet, dass** zwei Markierungen (3) angeordnet werden, wobei die Markierung (3) ein Paar (8) bilden, welches auf der Basisaufnahme (4) erfasst wird.

5. Verfahren nach einem der Ansprüche 1 bis 3, **dadurch gekennzeichnet, dass** eine Beurteilung (11) der Verschiebung und/oder eine Empfehlung (11) zur Reduktion einer Verschiebung des Rohrleitungssystems (1) an der entsprechenden Stelle mit Hilfe der ermittelten Werte (ΔX, ΔY, ΔZ) erfolgt.

6. Verfahren nach einem der Ansprüche 1 bis 5, **dadurch gekennzeichnet, dass** mittels der ermittelten Werte (ΔX, ΔY, ΔZ) und/oder Winkelverschiebungen Θ und eines Algorithmus eine Beurteilung (11) der Verschiebung und/oder Empfehlung (11) zur Reduktion der Verschiebung erstellt wird.

7. Verfahren nach einem der Ansprüche 1 bis 6, **dadurch gekennzeichnet, dass** das Erfassen / Scannen / Photographien mittels eines mobilen Endgerätes (7) oder einer Digitalkamera (7) erfolgt.

8. System zur Erkennung von Verschiebungen in installierten Rohrleitungssystemen (1) und Identifizierung von Komponenten (2) und deren Eigenschaften, beinhaltend:
ein installiertes Rohrleitungssystem (1), dessen Komponente (2), Befestigungselemente (12), Bauelemente (13), Markierungen (3), ein mobiles Endgerät (7) und/oder eine Digitalkamera (7), einen Speicher und eine Recheneinheit **dadurch gekennzeichnet, dass** mindestens zwei Markierungen (3) am Rohrleitungssystem (1) angeordnet sind, wobei jeweils zwei Markierungen (3) ein Paar (8) bilden, wobei das Markierungspaar (8) in einer Basisaufnahme (4) erfasst ist.

9. System nach Anspruch 8, **dadurch gekennzeichnet, dass** die Markierung (3) durch einen QR-Code gebildet ist.

10. System nach einem der Ansprüche 8 oder 9, **dadurch gekennzeichnet, dass** jeweils eine Markierung (3) des Markierungspaares (8) jeweils auf einer Komponente (2) des Rohrleitungssystems (1) angeordnet ist oder auf einer Komponente (2) und auf einem Bauelement (13).

## Claims

1. Method for detecting displacements in installed pipeline systems (1) and identifying components (2) and their properties, including:
• arranging or attaching at least two markers (3) on at least one of the components (2) of the installed pipeline system (1), or on different components (2) or on one component (2) and one structural element (13),
• recording or scanning or photographing the marker (3) and generating a baseline image (4) of the initial state,
• assigning properties and data to the marker (3) and depositing them therein,
• storing the baseline image (4) at a memory location (5),
• re-recording or re-scanning or re-photographing the marker (3),
• autonomously detecting the marker (3) and comparing it with the stored baseline image (4) of the corresponding marker (3),
• determining alterations or displacements of the marker (3),
• outputting (11) determined values (ΔX, ΔY, ΔZ, θ)
**characterized in that** the at least two markers are arranged such that they are recorded together on a baseline image (4).

2. Method according to Claim 1, **characterized in that** a follow-up image (6) is created when the marker (3) is re-recorded or re-scanned or re-photographed.

3. Method according to Claim 1 or 2, **characterized in that** the marker (3) is formed by a QR code.

4. Method according to any one of Claims 1 to 3, **characterized in that** two markers (3) are arranged, wherein the markers (3) form a pair (8) which is recorded on the baseline image (4).

5. Method according to any one of Claims 1 to 3, **characterized in that** an assessment (11) of the displacement and/or a recommendation (11) for reducing a displacement of the pipeline system (1) at the corresponding point is made based on the determined values (ΔX, ΔY, ΔZ).

6. Method according to any one of Claims 1 to 5, **characterized in that** an assessment (11) of the displacement and/or recommendation (11) for reducing the displacement is created by means of the determined values (ΔX, ΔY, ΔZ) and/or angular displacements θ and an algorithm.

7. Method according to any one of Claims 1 to 6, **characterized in that** the recording / scanning / photographing are carried out by means of a mobile terminal (7) or a digital camera (7).

8. System for detecting displacements in installed pipeline systems (1) and identifying components (2) and their properties, including:
an installed pipeline system (1), its components (2), fastening elements (12), structural elements (13), markers (3), a mobile terminal (7) and/or a digital camera (7), a memory and a computing unit, **characterized in that** at least two markers (3) are arranged on the pipeline system (1), wherein two markers (3) each form a pair (8), the marker pair (8) being recorded in a baseline image (4).

9. System according to Claim 8, **characterized in that** the marker (3) is formed by a QR code.

10. System according to either of Claims 8 or 9, **characterized in that** one marker (3) of the marker pair (8) is arranged on each component (2) of the pipeline system (1) or on one component (2) and on one structural element (13).

## Revendications

1. Procédé de détection de déplacements dans des systèmes de canalisations installés (1) et d'identification de composants (2) et de leurs propriétés, ledit procédé comprenant les étapes suivantes :
• disposer ou fixer au moins deux marquages (3) sur au moins un des composants (2) du système de canalisations installé (1), ou sur différents composants (2) ou sur un composant (2) et un élément de construction (13),
• capturer ou scanner ou photographier le marquage (3) et générer une prise de vue de base (4) de l'état initial,
• attribuer au marquage des propriétés et des données (3) et les stocker,
• mémoriser la prise de vue de base (4) dans un emplacement de mémoire (5),
• capturer ou scanner ou photographier à nouveau le marquage (3),
• effectuer une reconnaissance autonome du marquage (3) et la comparer à la prise de vue de base mémorisée (4) du marquage (3) correspondant,
• déterminer des changements ou déplacements du marquage (3),
• délivrer en sortie (11) des valeurs déterminées (ΔX, ΔY, ΔZ, Θ)
**caractérisé en ce que** les au moins deux marquages sont disposés de manière à être capturés conjointement sur une prise de vue de base (4).

2. Procédé selon la revendication 1, **caractérisé en ce que** lorsque le marquage (3) est à nouveau capturé ou scanné ou photographié, une prise de vue de suivi (6) est créée.

3. Procédé selon la revendication 1 ou 2, **caractérisé en ce que** le marquage (3) est formé par un QR code.

4. Procédé selon l'une des revendications 1 à 3, **caractérisé en ce que** deux marquages (3) sont disposés, le marquage (3) formant une paire (8) qui est capturée sur la prise de vue de base (4).

5. Procédé selon l'une des revendications 1 à 3, **caractérisé en ce qu'**une évaluation (11) du déplacement et/ou une recommandation (11) de réduction d'un déplacement du système de canalisations (1) au point correspondant sont effectuées à l'aide des valeurs déterminées (ΔX, ΔY, Δ2).

6. Procédé selon l'une des revendications 1 à 5, **caractérisé en ce qu'**une évaluation (11) du déplacement et/ou une recommandation (11) de réduction du déplacement sont créées au moyen des valeurs déterminées (ΔX, ΔY, ΔZ) et/ou des déplacements angulaires Θ et d'un algorithme.

7. Procédé selon l'une des revendications 1 à 6, **caractérisé en ce que** le processus de capture/scannage/photographie est réalisé à l'aide d'un terminal mobile (7) ou d'un appareil photo numérique (7).

8. Système de détection des déplacements dans les systèmes de canalisations installés (1) et d'identification des composants (2) et de leurs propriétés, ledit système comprenant :
un système de canalisations installé (1), un composant (2) de celui-ci, des éléments de fixation (12), des éléments de construction (13), des marquages (3), un terminal mobile (7) et/ou un appareil photo numérique (7), une mémoire et une unité informatique, **caractérisée en ce qu'**au moins deux marquages (3) sont disposés sur le système de canalisations (1), deux marquages (3) formant à chaque fois une paire (8), la paire de marquages (8) étant capturées dans une prise de vue de base (4).

9. Système selon la revendication 8, **caractérisé en ce que** le marquage (3) est formé par un QR code.

10. Système selon l'une des revendications 8 ou 9, **caractérisé en ce qu'**un marquage (3) de la paire de marquages (8) est disposé sur un composant (2) du système de canalisations (1) ou sur un composant (2) et sur un élément de construction (13).
